Europäisches Patentamt

European Patent Office

Office européen des brevets

(19)

(11) Veröffentlichungsnummer: **0 192 124 B1**

## (12) EUROPÄISCHE PATENTSCHRIFT

(45) Veröffentlichungstag der Patentschrift: 31.07.91

(51) Int. Cl.⁵: **C01B 15/12**

(21) Anmeldenummer: 86101494.2

(22) Anmeldetag: 05.02.86

(54) **Superoxidiertes Natriumperborat.**

(30) Priorität: 15.02.85 DE 3505158

(43) Veröffentlichungstag der Anmeldung:
27.08.86 Patentblatt 86/35

(45) Bekanntmachung des Hinweises auf die
Patenterteilung:
31.07.91 Patentblatt 91/31

(84) Benannte Vertragsstaaten:
AT BE CH DE FR GB IT LI NL SE

(56) Entgegenhaltungen:
FR-A- 2 016 936
FR-A- 2 386 476

CHEMICAL ABSTRACTS, Band 91, Nr. 6, 6.
August 1979, Seite 94, Zusammenfassung
Nr. 41177k, Columbus, Ohio, US; & BR-A-78
02 110 (INTEROX) 19-12-1978

(73) Patentinhaber: Peroxid-Chemie GmbH
Dr.-Gustav-Adolph-Strasse 3
W-8023 Höllriegelskreuth bei München(DE)

(72) Erfinder: Dötsch, Werner, Dr. Dipl.-Chem.
Kreuzgasse 3
W-5462 Bad Hönningen(DE)
Erfinder: Siegel, Rudolf
Kurt-Schumacher-Strasse 8
W-5450 Neuwied 13(DE)

(74) Vertreter: Lauer, Dieter, Dr.
c/o Kali-Chemie AG Postfach 220 Hans-
Böckler-Allee 20
W-3000 Hannover 1(DE)

**Beschreibung**

Die Erfindung betrifft ein superoxidiertes Natriumperborat sowie ein Verfahren zu seiner Herstellung.

Superoxidierte Natriumperborate (SOPB) sind bereits bekannt. Aus der DE-OS 28 11 554 ist ein SOPB bekannt, das mehr als 17 Gew.-% aktiven Sauerstoff und weniger als 1,4 Atome Wasserstoff pro aktives Sauerstoffatom enthält. Es wird hergestellt durch Einführen von Metaboratlösung und $H_2O_2$ in einem Molverhältnis von 1 : > 1,2 in ein Wirbelbett aus vorgelegten Keimen und Verdampfung des in der wässerigen Lösung enthaltenen Wassers. Es werden dabei Produkte erhalten, die offenbar ein Gemisch verschiedener Adduktformen des Peroxoborats sind, was auch durch die vorgeschlagene Summenformel

$(Na\ BO_3.H_2O_2)_x$ . $(Na\ BO_3.H_2O)_y$ . $(Na\ BO_3)_z$

zum Ausdruck kommt.

Andere SOPB sind aus GB-PS 798 217 und FR-A-1 590 710 bekannt. Erstere werden durch Kontakttrocknung gewonnen, indem Lösungen von $H_2O_2$ und Metaborat über eine heiße Oberfläche von 100 - 130 °C geleitet werden, letztere werden aus einem organischen Medium gefällt. Beide SOPB sind offenbar Addukte von $H_2O_2$ an Peroxoborat.

Aufgabe der Erfindung ist es, neue superoxidierte Perborate (SOPB) zur Verfügung zu stellen.

Die Aufgabe wird gelöst durch das in den Ansprüchen angegebene und in der Beschreibung weiter charakterisierte SOPB.

Eine weitere Aufgabe bestand darin, ein speziell angepaßtes, einfaches Verfahren zur Herstellung des SOPB zur Verfügung zu stellen.

Diese Aufgabe wird gelöst durch das angegebene Verfahren.

Gegenstand der Erfindung ist ein Natriumperborat mit einem Aktivsauerstoffgehalt von über 16 Gew.-%, welche a) folgende Charakteristika des IR-Spektrums (KBr-Preßling) aufweist:
- diskrete Banden im Bereich von etwa 3430, 2820, 1640, 1060 1/cm
- fehlende isolierte Bande bei 850 - 870 1/cm
- Durchlässigkeitsverhältnis $D_{1060}$ : $D_{3430}$ < 1,0, wobei D die Durchlässigkeit bei der entsprechenden Wellenzahl, gemessen in % bedeutet,und bei dem b) ein endothermer Peak ab 100 °C in Differentialthermogramm fehlt.

Das angegebene IR-Spektrum gibt die für das SOPB charakteristischen Hauptbanden an, wie sie bei üblicher Aufnahmetechnik anhand eines KBr-Preßlings gewonnen werden. Die Wellenzahlen geben dabei die Maxima der Banden an, die entsprechend der üblichen Schwankungsbreite mit einer Genauigkeit von +/- 10 bis 20 1/cm reproduzierbar sind.

Das erfindungsgemäße SOPB zeigt im Bereich 850 - 870 1/cm keine isolierte Bande; hier ist lediglich eine schwach ausgebildete Schulter erkennbar, ebenso im Bereich von etwa 950 1/cm.

Der Parameter "Durchlässigkeitsverhältnis" wird bestimmt durch Messung der Durchlässigkeiten (in %) im Maximum der Banden bei 1060 bzw 3430 1/cm und Bildung des entsprechenden Quotienten. Dieses Durchlässigkeitsverhältnis ist bei den erfindungsgemäßen Verbindungen immer kleiner als 1,0, vorzugsweise < 0,8.

Ein gutes, erfindungsgemäßes SOPB ist weiterhin durch folgende Zusammensetzung gekennzeichnet

```
Na:    19 - 28     Gew.-%
B:      9 - 13,5, vorzugsweise 10 - 13   Gew.-%
O.:    16 - 30,    vorzugsweise 18 - 29,5 Gew.-%,
                   insbesondere 22 - 29,5 Gew.-%
```

Erfindungsgemäßes SOPB zeigt in der Regel eine BET-Oberfläche von weniger als 0,5 m²/g.

Mit der BET-Methode wird die innere Oberfläche von Substraten gemessen. Dabei können noch Oberflächen bis herab zu 0,5 m²/g recht genau erfaßt werden. Das erfindungsgemäße Produkt liegt unterhalb dieser Grenze; eine Abschätzung ergibt für bevorzugte Produkte sogar Oberflächen unter 0,1 m²/g. Solche Natriumperborate sind also praktisch porenfrei.

Bevorzugte erfindungsgemäße Produkte zeichnen sich ferner durch eine oder mehrere der folgenden Eigenschaften aus:

Sie haben im wesentlichen kugelförmige Partikel-Gestalt. Das Schüttgewicht liegt im Bereich von 0,2 bis 0,4 g/ml.

Die Produkte sind sehr feinteilig und weisen ein enges Kornspektrum auf. So liegen 50 Gew.-%,

vorzugsweise 70 Gew.-% der Partikel im Bereich von 10 bis 20 $\mu$m Durchmesser.

Die erfindungsgemäßen Produkte werden durch ein besondere angepaßtes Verfahren hergestellt, das dadurch gekennzeichnet ist, daß man

a) eine Lösung oder Suspension herstellt, die Na-Metaborat und $H_2O_2$ enthält, wobei Borat (berechnet als $B_2O_3$) in einer Konzentration von 90 bis 130 g/l vorliegt und das molare Verhältnis von $H_2O_2$ zu $B_2O_3$ von 2,2 : 1 bis 8 : 1 beträgt,

b) diese Lösung oder Suspension in einem Sprühtrockner bei einer Ablufttemperatur von 55 bis 120 °C, vorzugsweise 60 bis 95 °C trocknet und

c) das anfallende Sprühgut gewinnt.

Die in Stufe a) hergestellte Lösung oder Suspension kann auf an sich bekannte Weise hergestellt werden durch Vermischen von Natriummetaborat und $H_2O_2$.

Als Metaborat kann eine Metaborat-Lösung eingesetzt werden, die beispielsweise durch Umsetzung von Borsäure mit Natronlauge oder, bevorzugt, durch Auflösen von festem Metaborat in Wasser erhalten wurde. Eine andere Variante sieht vor, festes Metaborat direkt in $H_2O_2$ einzutragen.

Als $H_2O_2$ werden wässerige Lösungen von $H_2O_2$ in einem Konzentrationsbereich von 35 - 80 % eingesetzt. So ist es beispielsweise möglich, Roh-$H_2O_2$ mit ca. 35 - 45 % aus einer $H_2O_2$-Herstellung vor der Destillation abzuzweigen und im erfindungsgemäßen Verfahren einzusetzen. Eine andere Variante sieht vor, $H_2O_2$-Destillat mit ca. 70 % einzusetzen.

Die Reaktionspartner werden unter Berücksichtigung der angegebenen Parameter vereinigt, d. h. in der resultierenden Lösung/Suspension soll die Konzentration an Bor (berechnet als $B_2O_3$) von 90 bis 130 g/l betragen und $H_2O_2$ und $B_2O_3$ ein molares Verhältnis von 2,2 : 1 bis 8 : 1, vorzugsweise 2,2 : 1 bis 5,2 : 1 bilden.

Es ist möglich, unter den angegebenen Bedingungen sowohl eine Lösung als auch eine Suspension zu erhalten. Die angegebenen Konzentrationen und Molverhältnisse gelten für den Fall der Suspension für in der abfiltrierten Stammlösung bestimmte Werte. Unter Suspension wird eine Lösung verstanden, in der Feststoffpartikel enthalten sind. Bevorzugt liegt der mittlere Teilchendurchmesser der Partikel einer Suspension unter 10 $\mu$m. In der bevorzugten Variante wird eine Lösung hergestellt.

Es ist möglich, auch Lösungen oder Suspensionen zu verwenden, die übliche Aktivsauerstoffstabilisatoren enthalten. übliche Stabilisatoren sind beispielsweise Alkalimetall- oder Magnesiumsilicate, Magnesiumsulfat, Phosphate, insbesondere Metaphosphate oder organische Stabilisatoren wie Chinolinsäure, Salicylsäure, Dipicolinsäure (DPA), Chelatbildner wie 8-Oxychinolin oder Ethylendiaminotetraessigsäure (EDTA) oder Phosphonsäurederivate wie Aminotri-(Alkyliden-Phosphonsäure), Ethylendiaminotetra-(methylenphosphonsäure), Alkyliden-Diphosphonsäure oder deren Salze wie z. B. Ethan-1-hydroxy-1,1-diphosphonat (EHDP).

Stabilisatoren werden im Anwendungsfalle in üblichen Konzentrationen von 2 bis 30 g/l $H_2O_2$ (ber. als 100 %) eingesetzt.

Bei der Herstellung der Lösungen brauchen keine besonderen Maßnahmen hinsichtlich der Temperatur getroffen werden. Es können beispielsweise Lösungen/Suspensionen mit Temperaturen im Bereich von 15 - 60 °C, vorzugsweise 40 - 50 °C, hergestellt werden.

Die aus Stufe a) resultierende Lösung/Suspension wird in an sich bekannter Weise in einem Sprühtrockner getrocknet. Dabei können sowohl Sprühtrockner mit Sprühdüsen als auch rotierenden Zerstäubungselementen eingesetzt werden. Produktstrom und Temperatur bzw. Durchsatz der Trockenluft worden so abgestimmt, daß eine Ablufttemperatur von 55 - 120 °C, vorzugsweise 60 - 95 °C erreicht wird.

Trockengas und Produkt werden auf an sich übliche Weise getrennt. Feinanteile können noch über einen Zyklon oder äquivalente Abtrennvorrichtungen gewonnen und zur Stufe a) rückgeführt werden.

Es ist zwar bereits bekannt, Perborate durch Sprühtrocknung zu gewinnen.
Nach DE-PS 703 563 werden aber kristallisierte Produkte mit etwa 10,3 % Aktivsauerstoff gewonnen.
Nach DE-AS 1 019 281 werden Salzgemische mit $H_2O_2$ versprüht und offenbar auch nur "normale", d. h. nicht superoxidierte Perverbindungen erhalten.
Nach DE-AS 17 92 273 und DE-OS 18 14 744 werden Perverbindung und Metaborat direkt vor der Sprühdüse gemischt und bei Ablufttemperaturen von 40 - 100 °C getrocknet. Es resultieren Produkte mit nur etwa 15 % Aktivsauerstoff, also ebenfalls "normale" Perborate. Diese Verbindungen zeigen auch ein abweichendes IR-Spektrum, in dem die Bande bei etwa 2850 1/cm fehlt und bei etwa 840 1/cm eine isolierte, intensive Bande erscheint.

Erfindungsgemäße Produkte unterscheiden sich von allen diesen bekannten Produkten u. a. durch den erhöhten Aktivsauerstoffgehalt. Sie sind ferner röntgenamorph.

Gegenüber bekannten superoxidierten Perboraten wie sie aus DE-OS 28 11 554 bekannt sind unterscheiden sie sich des weiteren durch das Differentialthermogramm:

3

während jene Produkte neben dem exothermen Zersetzungspeak bei etwa 150 °C noch einen endothermen Peak im Bereich ab-100 °C zeigen, fehlt der endotherme Peak bei erfindungsgemäßem SOPB.

Das erfindungsgemäße SOPB zeichnet sich durch überraschende Eigenschaften aus.

So ist die Stabilität gegen Umwandlung in das thermodynamisch stabilere Peroxoborat Trihydrat erhöht gegenüber Produkten, die gemäß dem Stand der Technik hergestellt wurden.

Ferner zeigen sie beim Eingeben in Wasser - z. B. für Wasch und/oder Bleichzwecke - ein gegenüber bekanntem Natriumperborat abgewandeltes Verhalten, indem sie - wahrscheinlich bedingt durch die weitgehende Porenfreiheit und die Härte der Partikeloberfläche - in Wasser in Schwebe bleiben oder sich sogar an der Oberfläche anreichern und sich dort auflösen. Damit kann es z. B. bei der Verwendung in Wasch- und/oder Bleichmitteln nicht mehr zum Verlust an Aktivsauerstoff dadurch kommen, daß Perborat-Teilchen bei der Eingabe in Wasser in Bereiche der Apparatur absinken, aus denen sie durch Stömungseinwirkung nur schwer rückführbar sind. Dieser Vorteil bleibt sogar dann erhalten, wenn die erfindungsgemäßen Perborat-Partikel durch Granulation zu Granulaten von 100 bis 300 $\mu$m Durchmesser konfektioniert werden.

Diese Vorteile waren angesichts des Standes der Technik nicht zu erwarten gewesen.

Auch das Verfahren zur Herstellung erfindungsgemäßen SOPB zeichnet sich durch Vorteile aus wie
- einfache Verfahrensführung,
- Umweltfreundlichkeit, denn es entstehen weder flüssige noch feste Produkte, die aufgearbeitet oder deponiert werden müssen
- kontinuierliche Verfahrensführung.

Die Erfindung wird durch die folgenden Beispiele näher charakterisiert, ohne daß die Beispiele den Umfang der Erfindung beschränken sollen.

Beispiele

Beispiel 1 bis 3

In ein Ansatztgefäß wurde zu vorgelegter Natrium-Metaboratlauge bei 40 - 45 °C unter Rühren 72 Gew.-%ige $H_2O_2$-Lösung eindosiert, die mit 10 g Magnesiumsulfat und 5 ml EHDP/l $H_2O_2$-Lösung stabilisiert war.

Die derart hergestellte Lösung, die die in der Tabelle angegebene Zusammensetzung besaß, wurde in einen Sprühtrockner eingedüst und bei einer Ablufttemperatur von 90 °C getrocknet. Über einen Zyklon wurde das Endprodukt abgetrennt. Es bestand aus im wesentlichen kugelförmigen Partikeln mit einer durchschnittlichen Teilchengröße von 20 $\mu$m, bestimmt über Vermessung von REM-Aufnahmen und zeigte die in der Tabelle angegebene Zusammensetzung. Im Beispiel 3 wurde entsprechend der Rahmenvorschrift kontinuierlich gearbeitet, d. h. Metaborat-Lauge und $H_2O_2$-Lösung wurden kontinuierlich in das Ansatzgefäß eindosiert und nach Maßgabe des Zulaufs kontinuierlich zur Eindüsung in den Sprühtrockner entnommen.

In der nachfolgenden Tabelle bedeuten

- $B_2O_3$   die Borkonzentration in der im Ansatzgefäß her-gestellten Lösung, berechnet als g $B_2O_3$/l Lösung
- M   Molverhältnis $H_2O_2$ : $B_2O_3$ in der Lösung
- T.   Temperatur der Abluft, gemessen am Ausgang des Sprühtrockners
- O.   Aktivsauerstoffgehalt, bestimmt durch Titration mit Permanganat
- B   Bor-Gehalt, bestimmt durch AAS
- N.   Natrium-Gehalt, bestimmt durch Röntgenfluoreszenz

| Beispiel | 1 | 2 | 3 |
|----------|------|------|------|
| $B_2O_3$ | 99,4 | 94 | 94 |
| M | 2,42 : 1 | 3,46 : 1 | 3.46 : 1 |
| O. | 18,5 | 24,4 | 24,4 |
| B | 11,5 | 10,5 | 10,6 |
| N. | 22,3 | 20,1 | 20,0 |

Die Produkte der Beispiele 1 - 3 sind ferner durch folgende Eigenschaften charakterisiert
- DTA-Kurve
  Isotherme bis etwa 110 °C, danach zunehmender, monotoner Anstieg bis zum Maximum des exothermen Zersetzungspeaks bei ca. 155 °C.
- IR-Spektrum (KBr-Preßling)
a) Isolierte Banden bei

| Beispiel | Wellenzahl 1/cm |
|----------|-----------------|
| 1 | 3428, 2810, 1644, 1062 |
| 2 | 3426, 2824, 1639, 1064 |
| 3 | 3432, 2828, 1636, 1060 |

b) Fehlende isolierte Bande im Bereich von 850 - 870 1/cm (jeweils nur schwache Schulter bei 856, 864 bzw, 862 1/cm)
c) Durchlässigkeitsverhältnis $D_{1060} : D_{3430}$
Beispiel 1: 0,69
Beispiel 2: 0,66
Beispiel 3: 0,66
- NMR-Spektrum
  Gemessen wurde das Festkörper 11-Bor-MAS-(1H)NMR-Spektrum bei 96,3 MHz. Als Standard (0 ppm) diente eine wässerige Lösung von $H_3BO_3$. Das Produkt aus Beispiel 1 zeigt 3 Signale mit folgenden Merkmalen

| isotrope Verschiebung | rel. Intensität |
|---|---|
| - 12,5 | 4,9 |
| - 14,4 | 2,5 |
| - 15,7 | 1,0 |

Das für kristallisierte Perborate (Mono- bzw, Trihydrat) charakteristische starke Signal bei -16,9 fehlt völlig. Es liegt daher die Vermutung nahe, daß es sich bei dem erfindungsgemäßen SOPB um Produkte mit abweichendem strukturellen Aufbau, gegebenenfalls um höher kondensiertes Perborat, handelt. Die Erfindung soll jedoch durch diese Interpretation nicht beschränkt werden.

Beispiel 4

In einer weiteren Versuchsreihe wurde ähnlich der Rahmenvorschrift, allerdings unter Variation der Ablufttemperatur gearbeitet. Es wurden SOPB mit folgendem Aktivsauerstoffgehalt, ansonsten aber entsprechenden Eigenschaften erhalten,

| $T_{.}$ | 65 | 70 | 75 | 85 | 95 | 105 |
|---|---|---|---|---|---|---|
| $O_{.}$ | 18,3 | 18,3 | 18,6 | 18,8 | 18,8 | 18,3 |

Beispiel 5

Ein erfindungsgemäßes Produkt wird entsprechend den Rahmenbedingungen von Beispiel 1 auch unter folgenden Bedingungen erhalten

- $B_2 O_3$  88,7
- M      5,02 : 1
- $T_{.}$   90 °C

Das Reaktionsprodukt zeichnete sich durch folgende analytischen Daten aus:

$O_{.}$  29,2  Gew.-%

B    9,73 Gew.-%

Na 19,0  Gew.-%

## Patentansprüche

1. Natriumperborat mit einem Aktivsauerstoffgehalt von über 16 Gew.-%, welche a) folgende Charakteristika des IR-Spektrums (KBr-Preßling) aufweist:
   - diskrete Banden im Bereich von etwa 3430, 2820, 1640, 1060 1/cm
   - fehlende isolierte Bande bei 850 - 870 1/cm
   - Durchlässigkeitsverhältnis $D_{1060}$ : $D_{3430}$ < 1,0, wobei D die Durchlässigkeit bei der entsprechenden Wellenzahl, gemessen in % bedeutet, und bei dem b) ein endothermer Peak ab 100 °C im Differentialthermogramm fehlt.

2. Natriumperborat gemäß Anspruch 1, gekennzeichnet durch folgende Zusammensetzung

$$Na: \quad 19 - 28 \quad Gew.\%$$
$$B: \quad 9 - 13,5, \ vorzugsweise \ 10 - 13 \quad Gew.\%$$
$$O_.: \quad 16 - 30, \quad vorzugsweise \ 18 - 29,5 \ Gew.\%$$

3. Natriumperborat gemäß einem der vorhergehenden Ansprüche, gekennzeichnet durch eine BET-Oberfläche von weniger als 0,5 m²/g.

4. Natriumperborat nach einem der vorhergehenden Ansprüche gekennzeichnet durch im wesentlichen kugelförmige Partikelgestalt.

5. Natriumperborat gemäß einem der vorhergehenden Ansprüche, dadurch gekennzeichnet, daß 50 Gew.-%, vorzugsweise 70 Gew.-% der Partikel einen Teilchendurchmesser im Bereich von 10 - 20 $\mu$m aufweisen.

6. Verfahren zur Herstellung von Natriumperborat entsprechend einem der vorhergehenden Ansprüche, dadurch gekennzeichnet, daß man
   a) eine Lösung oder Suspension herstellt, die Na-Metaborat und $H_2O_2$ enthält, wobei Borat (berechnet als $B_2O_3$) in einer Konzentration von 90 bis 130 g/l vorliegt und das molare Verhältnis von $H_2O_2$ zu $B_2O_3$ von 2,2 : 1 bis 8,0 : 1 beträgt,
   b) diese Lösung oder Suspension in einem Sprühtrockner bei einer Ablufttemperatur von 55 bis 120 $^\circ$C, vorzugsweise 60 bis 95 $^\circ$C trocknet und
   c) das anfallende Sprühgut gewinnt.

## Claims

1. Sodium perborate with an active oxygen content of more than 16% by weight which a) has the following characteristics of the IR spectrum (compressed KBr)
   - discrete bands within the range of approximately 3430, 2820, 1640, 1060 1/cm
   - missing individual bands at 850-870 1/cm
   - permeability ratio $D_{1060}:D_{3430} < 1.0$, where D represents the permeability at the corresponding wave number measured in percent, and in which b) there is no endothermic peak at above 100 $^\circ$C in the differential thermogram.

2. Sodium perborate according to claim 1 characterised by the following composition:

$$Na: \quad 19\text{-}28\% \ by \ weight$$
$$B: \quad 9\text{-}13.5 \ preferably \ 10\text{-}13\% \ by \ weight$$
$$O_2: \quad 16\text{-}30, \ preferably \ 18\text{-}29.5\% \ by \ weight$$

3. Sodium perborate according to one of the preceding claims characterised by a BET surface area of less than 0.5 m²/g.

4. Sodium perborate according to one of the preceding claims characterised by an essentially spherical particle form.

5. Sodium perborate according to one of the preceding claims characterised in that 50% by weight,

7

EP 0 192 124 B1

preferably 70% by weight, of the particles have a particle diameter in the region of 10 - 20 $\mu$m.

6. Process for the preparation of sodium perborate according to one of the preceding claims characterised in that

a) a solution or a suspension is prepared which contains Na metaborate and $H_2O_2$, the borate (calculated as $B_2O_3$) being present in a concentration of 90 to 130 g/l and the molar ratio of $H_2O_2$ to $B_2O_3$ being 2.2 : 1 to 8.0 : 1,

b) this solution or suspension is dried in a spray dryer at an off-gas temperature of 55 to 120°C, preferably of 60 to 95°C and

c) the resulting sprayed substance is recovered.

**Revendications**

1. Perborate de sodium ayant une teneur en oxygène actif supérieure à 16 % en poids,

a) qui présente un spectre IR (pastille de KBr) ayant les caractéristiques suivantes :
   - bandes discrètes à environ 3430, 2820, 1640, 1060 cm$^{-1}$,
   - bandes isolées manquantes à 850-870 cm$^{-1}$,
   - rapport de transparence $D_{1060}$ : $D_{3430}$ < 1,0, D étant la transparence pour le nombre d'onde correspondant, mesuré en %, et dans lequel

b) un pic endothermique, à partir de 100°C, manque sur la courbe d'analyse thermique différentielle.

2. Perborate de sodium selon la revendication 1, caractérisé par la composition suivante :

```
Na : 19 - 28 % en poids,
B  : 9 - 13,5, de préférence 10 - 13 % en poids,
O  : 16 - 30, de  préférence 18 - 29,5 % en poids.
```

3. Perborate de sodium selon l'une des revendications précédentes, caractérisé par une surface BET inférieure à 0,5 m²/g.

4. Perborate de sodium selon l'une des revendications précédentes, caractérisé en ce qu'il se présente sous forme de particules essentiellement sphériques.

5. Perborate de sodium selon l'une des revendications précédentes, caractérisé en ce que 50 % en poids, de préférence 70 % en poids des particules ont un diamètre compris entre 10 et 20 $\mu$m.

6. Procédé de préparation de perborate de sodium selon l'une des revendications précédentes, caractérisé en ce que:

a) on prépare une solution ou une suspension contenant du métaborate de Na et du $H_2O_2$, le borate (calculé en $B_2O_3$) étant présent en une concentration de 90 à 130 g/l, la proportion molaire du $H_2O_2$ au $B_2O_3$ étant de 2,2:1 à 8,0:1,

b) on sèche cette solution ou cette suspension dans un sécheur par atomisation, à une température de l'air de sortie de 55 à 120°C, de préférence de 60 à 95°C, et

c) on récupère le produit atomisé obtenu.

8